# EUROPEAN PATENT APPLICATION

(11) **EP 4 716 054 A1**
(43) Date of publication of application: **25.03.2026**
(21) Application number: 25203237.0
(22) Date of filing: 19.09.2025
(51) Int. Cl.: H02J 3/46, B64D 27/357, B64D 31/16, H02P 25/22, B60L 3/00, B64C 29/00, B64D 27/34

(54) **POWER SUPPLY SYSTEM, MOVING OBJECT, CONTROL METHOD FOR POWER SUPPLY SYSTEM, AND PROGRAM**

(30) Priority: 20.09.2024 JP 2024164043
(71) Applicant: Honda Motor Co., Ltd., Toyko 105-8404 (JP)
(72) Inventor: SHUTO, Kenta, Saitama, 351-0193 (JP)
(74) Representative: Weickmann & Weickmann PartmbB

(57) **Abstract**

In a case that supply of DC power from a first power generation device (14a) to a first power supply circuit (18a) is disrupted, a control device (30) executes, on a first inverter (15a), a first power suppression control to reduce electric power supplied from the first inverter to a first motor (17a) to be smaller than the electric power prior to the supply of DC power from the first power generation device to the first power supply circuit being disrupted, and also executes, on a second inverter (15b), a first power increasing control to increase electric power supplied from the second inverter to the first motor to be larger than the electric power prior to the supply of DC power from the first power generation device to the first power supply circuit being disrupted.

## Description

### BACKGROUND OF THE INVENTION

### FIELD OF THE INVENTION

The present disclosure relates to a power supply system, a moving object, a control method for the power supply system, and a program.

### DESCRIPTION OF THE RELATED ART

In JP 2022-529997 A, an aircraft electrical energy supply network (electrical power supply system) is disclosed.

### SUMMARY OF THE INVENTION

There is a demand for a more satisfactory power supply system, a more satisfactory moving object having the power supply system, a more satisfactory control method for the power supply system, and a more satisfactory program that causes a computer to execute the control method for the power supply system.

The present disclosure has the object of solving the aforementioned problem.

A first aspect of the present disclosure is characterized by a power supply system, including a first power supply circuit configured to supply, to a first inverter, DC power output from a first power generation device, a first power storage device connected to the first power supply circuit in parallel with the first power generation device, a second power supply circuit configured to supply, to a second inverter, DC power output from a second power generation device, a second power storage device connected to the second power supply circuit in parallel with the second power generation device, a first motor which is a dual three-phase motor configured to be driven by AC power obtained by conversion by the first inverter and further configured to be driven by AC power obtained by conversion by the second inverter, and a control device configured to control the first inverter and the second inverter, wherein, in a case that supply of the DC power from the first power generation device to the first power supply circuit is disrupted, the control device executes, on the first inverter, a first power suppression control to reduce a first ratio, which is a ratio of a first electric power supplied from the first inverter to the first motor with respect to an electric power consumption of the first motor, to be smaller than the first ratio prior to the supply of the DC power from the first power generation device to the first power supply circuit being disrupted, and executes, on the second inverter, a first power increasing control to increase a second ratio, which is a ratio of a second electric power supplied from the second inverter to the first motor with respect to the electric power consumption of the first motor, to be larger than the second ratio prior to the supply of the DC power from the first power generation device to the first power supply circuit being disrupted.

A second aspect of the present disclosure is characterized by a moving object including the power supply system according to the first aspect.

A third aspect of the present disclosure is characterized by a control method for a power supply system, wherein the power supply system includes a first power supply circuit configured to supply, to a first inverter, DC power output from a first power generation device, a first power storage device connected to the first power supply circuit in parallel with the first power generation device, a second power supply circuit configured to supply, to a second inverter, DC power output from a second power generation device, a second power storage device connected to the second power supply circuit in parallel with the second power generation device, and a first motor which is a dual three-phase motor configured to be driven by AC power obtained by conversion by the first inverter and further configured to be driven by AC power obtained by conversion by the second inverter, the control method for the power supply system, including, in a case that supply of the DC power from the first power generation device to the first power supply circuit is disrupted: executing, on the first inverter, a first power suppression control to reduce a first ratio, which is a ratio of a first electric power supplied from the first inverter to the first motor with respect to an electric power consumption of the first motor, to be smaller than the first ratio prior to the supply of the DC power from the first power generation device to the first power supply circuit being disrupted; and executing, on the second inverter, a first power increasing control to increase a second ratio, which is a ratio of a second power supplied from the second inverter to the first motor with respect to the electric power consumption of the first motor, to be larger than the second ratio prior to the supply of the DC power from the first power generation device to the first power supply circuit being disrupted.

A fourth aspect of the present disclosure is characterized by a program configured to cause a computer to execute the control method for the power supply system according to the third aspect.

According to the present disclosure, it is possible to provide a more satisfactory power supply system, a more satisfactory moving object having the power supply system, a more satisfactory control method for the power supply system, and a more satisfactory program that causes a computer to execute the control method for the power supply system.

The above and other objects, features, and advantages of the present invention will become more apparent from the following description when taken in conjunction with the accompanying drawings, in which a preferred embodiment of the present invention is shown by way of illustrative example.

### BRIEF DESCRIPTION OF THE DRAWINGS

FIG. 1 is a schematic diagram of a power supply system according to an embodiment;
FIG. 2 is a diagram showing the operation of the power supply system in the normal state in the embodiment;
FIG. 3 is a diagram showing the operation of the power supply system in the event of an abnormality in the embodiment;
FIG. 4 is a diagram showing the operation of the power supply system in the event of an abnormality in the embodiment;
FIG. 5 is a diagram showing the operation of the power supply system in the event of an abnormality in the embodiment;
FIG. 6 is a control block diagram of a control device in the embodiment;
FIG. 7 is a flowchart showing a failsafe control in the embodiment;
FIG. 8A, FIG. 8B, and FIG. 8C are graphs each showing the change over time in a state of the power supply system in a period before and after a first power supply subsystem and a second power supply subsystem are connected;
FIG. 9A, FIG. 9B, and FIG. 9C are graphs each showing the change over time in a state of the power supply system in a period before and after a first power supply subsystem and a second power supply subsystem are connected; and
FIG. 10 is a diagram showing a power supply system according to a Comparative Example.

### DETAILED DESCRIPTION OF THE INVENTION

Conventionally, a power supply system, which is equipped with two power supply subsystems, i.e., a first power supply subsystem and a second power supply subsystem, has been proposed as a power supply system that is mounted on an electric vertical take-off and landing aircraft (eVTOL).

The first power supply subsystem supplies electric power to a first motor, and is equipped with a first power generation device, which is a main power source, a first power storage device, which is an auxiliary power source, and a first power supply circuit that supplies power from the first power generation device to the first motor. The second power supply subsystem supplies power to a second motor, and is equipped with a second power generation device, which is a main power source, a second power storage device, which is an auxiliary power source, and a second power supply circuit that supplies power from the second power generation device to a second load device. The first motor and the second motor serve to drive the respective VTOL rotors that are mounted on an eVTOL.

In the case a state is brought about in which power cannot be supplied from the first power generation device to the first power supply circuit, it is necessary for the first motor to be driven using only the power from the first power storage device. For this reason, in a conventional power supply system, the output torque of the first motor is kept down to thereby extend the driving time of the first motor as long as possible. Further, the output torque of the second motor is increased to thereby compensate for the suppressed portion of the output torque of the first motor and ensure a lift thrust for the eVTOL as a whole.

However, with the conventional power supply system, even if the lift thrust can be ensured for the eVTOL as a whole, it is difficult to maintain a balance of the lift thrust of the VTOL rotors, and there is a concern that it may become difficult to maintain the posture of the aircraft.

In the present disclosure, even in the case that a state occurs in which power cannot be supplied from the first power generation device to the first power supply circuit, the output torque of the first motor can be ensured. Hereinafter, a description will be given concerning a power supply system, a moving object having the power supply system, a control method for the power supply system, and a program that causes a computer to execute the control method for the power supply system.

### [Embodiment]

### [Configuration of Power Supply System]

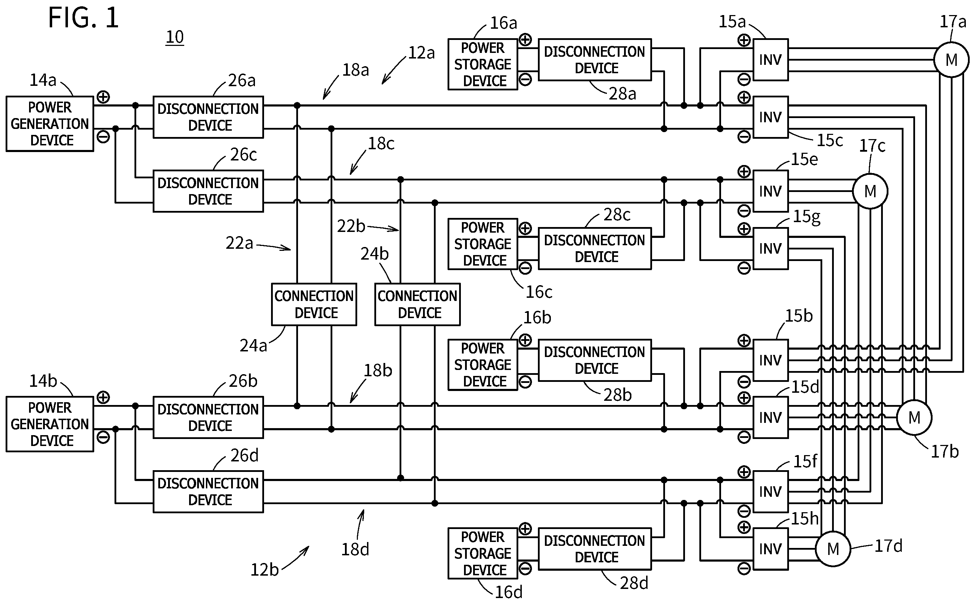

FIG. 1 is a schematic diagram of a power supply system 10 according to a present embodiment. The power supply system 10 includes a first power supply subsystem 12a and a second power supply subsystem 12b. The first power supply subsystem 12a includes a first power generation device 14a serving as a main power source, and a first power storage device 16a and a third power storage device 16c serving as auxiliary power sources. The second power supply subsystem 12b includes a second power generation device 14b serving as a main power source, and a second power storage device 16b and a fourth power storage device 16d serving as auxiliary power sources.

The first power supply subsystem 12a includes a first power supply circuit 18a and a third power supply circuit 18c. The first power supply circuit 18a supplies a direct-current power (DC power) that is output from the first power generation device 14a to a first inverter 15a and a third inverter 15c. The third power supply circuit 18c supplies a direct-current power (DC power) that is output from the first power generation device 14a to a fifth inverter 15e and a seventh inverter 15g.

The second power supply subsystem 12b includes a second power supply circuit 18b and a fourth power supply circuit 18d. The second power supply circuit 18b supplies a DC power that is output from the second power generation device 14b to a second inverter 15b and a fourth inverter 15d. The fourth power supply circuit 18d supplies DC power that is output from the second power generation device 14b to a sixth inverter 15f and an eighth inverter 15h.

The first power generation device 14a and the second power generation device 14b include an engine, a power generator, and a power control unit, none of which are shown. The power generator is driven by the engine and thereby generates three-phase alternating-current power (three-phase AC power). The power control unit converts three-phase AC power into DC power.

The first power generation device 14a and the second power generation device 14b may also include various sensors such as a voltage sensor, a current sensor, and the like, and various elements such as a fuse, a relay, a breaker, a diode, a transistor, a resistor, a coil, a capacitor, and the like.

The first inverter 15a converts an input DC power into a three-phase AC power, and outputs the converted AC power to a first motor 17a. The second inverter 15b converts an input DC power into a three-phase AC power, and outputs the converted AC power to the first motor 17a. The third inverter 15c converts an input DC power into a three-phase AC power, and outputs the converted AC power to a second motor 17b. The fourth inverter 15d converts an input DC power into a three-phase AC power, and outputs the converted AC power to the second motor 17b. The fifth inverter 15e converts an input DC power into a three-phase AC power, and outputs the converted AC power to a third motor 17c. The sixth inverter 15f converts an input DC power into a three-phase AC power, and outputs the converted AC power to the third motor 17c. The seventh inverter 15g converts an input DC power into a three-phase AC power, and outputs the converted AC power to a fourth motor 17d. The eighth inverter 15h converts an input DC power into a three-phase AC power, and outputs the converted AC power to the fourth motor 17d.

Each of the first motor 17a, the second motor 17b, the third motor 17c, and the fourth motor 17d is a dual three-phase motor.

The power supply system 10 includes a first connection circuit 22a and a second connection circuit 22b. The first connection circuit 22a includes a first connection device 24a that is capable of connecting the first power supply circuit 18a and the second power supply circuit 18b. The second connection circuit 22b includes a second connection device 24b that is capable of connecting the third power supply circuit 18c and the fourth power supply circuit 18d.

The first connection device 24a and the second connection device 24b each include a contactor. The first connection device 24a and the second connection device 24b may each include a relay. The first connection device 24a and the second connection device 24b may each include a breaker. The first connection device 24a and the second connection device 24b may each include a semiconductor switch.

Normally, the first power supply circuit 18a and the second power supply circuit 18b are disconnected by the first connection device 24a, and the third power supply circuit 18c and the fourth power supply circuit 18d are disconnected by the second connection device 24b. That is, the first power supply subsystem 12a and the second power supply subsystem 12b are not connected to each other. Consequently, in a case that an abnormality has occurred in one of the first power supply subsystem 12a or the second power supply subsystem 12b, it is possible to prevent the abnormality from adversely influencing the other one. For example, even if a short circuit occurs in the first power supply subsystem 12a, and it becomes impossible to supply power from the first power supply subsystem 12a to each of the first motor 17a, the second motor 17b, the third motor 17c, and the fourth motor 17d, each of the first motor 17a, the second motor 17b, the third motor 17c, and the fourth motor 17d can continue to operate, by means of the power supplied from the second power supply subsystem 12b.

In a case that supply of DC power from the first power generation device 14a to the first power supply circuit 18a and the third power supply circuit 18c is disrupted, the first power supply circuit 18a and the second power supply circuit 18b are connected by the first connection device 24a. Further, the third power supply circuit 18c and the fourth power supply circuit 18d are connected by the second connection device 24b. As a result, electric power is supplied from the second power generation device 14b to the first power supply circuit 18a and the third power supply circuit 18c.

In a case that supply of DC power from the second power generation device 14b to the second power supply circuit 18b and the fourth power supply circuit 18d is disrupted, the first power supply circuit 18a and the second power supply circuit 18b are connected by the first connection device 24a. Further, the third power supply circuit 18c and the fourth power supply circuit 18d are connected by the second connection device 24b. As a result, electric power is supplied from the first power generation device 14a to the second power supply circuit 18b and the fourth power supply circuit 18d.

The power supply system 10 includes disconnection devices 26a to 26d. The disconnection device 26a is capable of disconnecting the first power generation device 14a from the first power supply circuit 18a and the first connection circuit 22a. The disconnection device 26b is capable of disconnecting the second power generation device 14b from the second power supply circuit 18b and the first connection circuit 22a. The disconnection device 26c is capable of disconnecting the first power generation device 14a from the third power supply circuit 18c and the second connection circuit 22b. The disconnection device 26d is capable of disconnecting the second power generation device 14b from the fourth power supply circuit 18d and the second connection circuit 22b.

The disconnection devices 26a to 26d each include a contactor. The disconnection devices 26a to 26d may each include a relay. The disconnection devices 26a to 26d may each include a breaker. The disconnection devices 26a to 26d may each include a semiconductor switch.

The first power storage device 16a is connected to the first power supply circuit 18a in parallel with the first power generation device 14a. The second power storage device 16b is connected to the second power supply circuit 18b in parallel with the second power generation device 14b. The third power storage device 16c is connected to the third power supply circuit 18c in parallel with the first power generation device 14a. The fourth power storage device 16d is connected to the fourth power supply circuit 18d in parallel with the second power generation device 14b.

The first power storage device 16a, the second power storage device 16b, the third power storage device 16c, and the fourth power storage device 16d each include a lithium ion battery. The first power storage device 16a, the second power storage device 16b, the third power storage device 16c, and the fourth power storage device 16d may each include a secondary battery other than a lithium ion battery. The first power storage device 16a, the second power storage device 16b, the third power storage device 16c, and the fourth power storage device 16d may each include a large-capacitance capacitor.

The first power storage device 16a, the second power storage device 16b, the third power storage device 16c, and the fourth power storage device 16d may also include various sensors such as voltage sensors, current sensors, and the like, and various elements such as fuses, relays, breakers, diodes, transistors, resistors, coils, capacitors, and the like.

The power supply system 10 includes disconnection devices 28a to 28d. The disconnection device 28a is capable of disconnecting the first power storage device 16a from the first power supply circuit 18a, the first inverter 15a, and the third inverter 15c. The disconnection device 28b is capable of disconnecting the second power storage device 16b from the second power supply circuit 18b, the second inverter 15b, and the fourth inverter 15d. The disconnection device 28c is capable of disconnecting the third power storage device 16c from the third power supply circuit 18c, the fifth inverter 15e, and the seventh inverter 15g. The disconnection device 28d is capable of disconnecting the fourth power storage device 16d from the fourth power supply circuit 18d, the sixth inverter 15f, and the eighth inverter 15h.

The disconnection devices 28a to 28d each include a contactor. The disconnection devices 28a to 28d may each include a relay. The disconnection devices 28a to 28d may each include a breaker. The disconnection devices 28a to 28d may each include a semiconductor switch.

As shown in FIG. 1, in a case that the disconnection devices 26a and 26c and the disconnection devices 28a and 28c are in a connected state, the first power generation device 14a, the first power storage device 16a, the first inverter 15a, the third inverter 15c, the third power storage device 16c, the fifth inverter 15e, and the seventh inverter 15g are mutually connected to each other. Therefore, if the amount of voltage drop in the first power supply circuit 18a and the third power supply circuit 18c is considered to be sufficiently small, the output voltage of the first power generation device 14a, the output voltage of the first power storage device 16a, the voltage applied to the first inverter 15a, the voltage applied to the third inverter 15c, the output voltage of the third power storage device 16c, the voltage applied to the fifth inverter 15e, and the voltage applied to the seventh inverter 15g are substantially equal to each other. Hereinafter, the output voltage of the first power generation device 14a, the output voltage of the first power storage device 16a, the voltage applied to the first inverter 15a, the voltage applied to the third inverter 15c, the output voltage of the third power storage device 16c, the voltage applied to the fifth inverter 15e, and the voltage applied to the seventh inverter 15g may be collectively referred to as the voltage of the first power supply subsystem 12a.

Similarly, in a case that the disconnection devices 26b and 26d and the disconnection devices 28b and 28d are in a connected state, the second power generation device 14b, the second power storage device 16b, the second inverter 15b, the fourth inverter 15d, the fourth power storage device 16d, the sixth inverter 15f, and the eighth inverter 15h are mutually connected to each other. Therefore, the output voltage of the second power generation device 14b, the output voltage of the second power storage device 16b, the voltage applied to the second inverter 15b, the voltage applied to the fourth inverter 15d, the output voltage of the fourth power storage device 16d, the voltage applied to the sixth inverter 15f, and the voltage applied to the eighth inverter 15h are substantially equal to each other. Hereinafter, the output voltage of the second power generation device 14b, the output voltage of the second power storage device 16b, the voltage applied to the second inverter 15b, the voltage applied to the fourth inverter 15d, the output voltage of the fourth power storage device 16d, the voltage applied to the sixth inverter 15f, and the voltage applied to the eighth inverter 15h may be collectively referred to as the voltage of the second power supply subsystem 12b.

### [Operation of Power Supply System in Normal State]

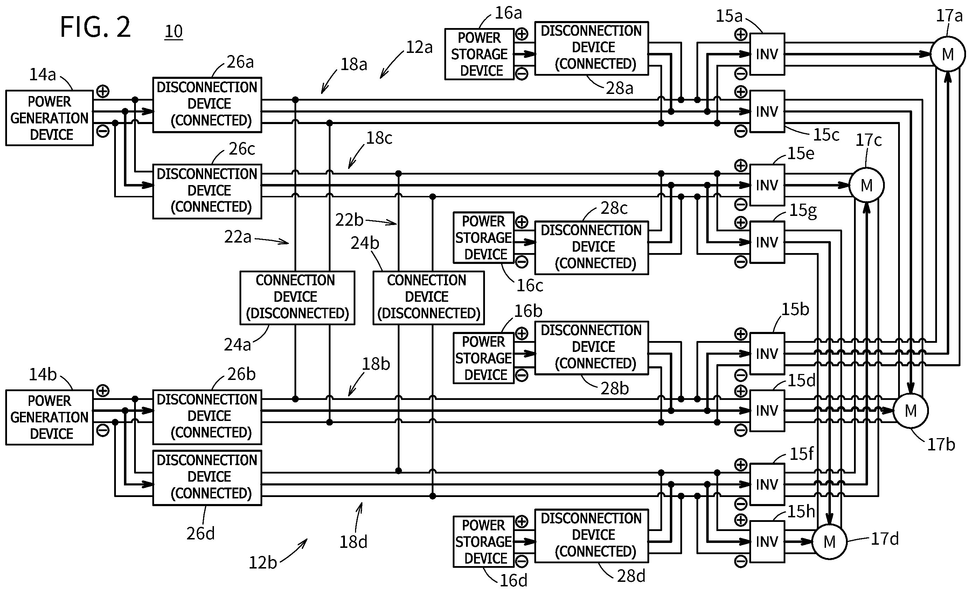

FIG. 2 is a diagram showing the operation of the power supply system 10 in the normal state in an embodiment. The arrows shown in FIG. 2 indicate electric power supply paths.

The connection between the first power supply circuit 18a and the second power supply circuit 18b is disconnected by the first connection device 24a. The connection between the third power supply circuit 18c and the fourth power supply circuit 18d is disconnected by the second connection device 24b.

The first power generation device 14a is connected by the disconnection device 26a to the first power supply circuit 18a and the first connection circuit 22a. Thus, DC power is supplied from the first power generation device 14a to the first inverter 15a and the third inverter 15c. The first power generation device 14a is connected by the disconnection device 26c to the third power supply circuit 18c and the second connection circuit 22b. Thus, electric power is supplied from the first power generation device 14a to the fifth inverter 15e and the seventh inverter 15g.

The first power storage device 16a is connected by the disconnection device 28a to the first inverter 15a and the third inverter 15c. Thus, DC power is supplied from the first power storage device 16a to the first inverter 15a and the third inverter 15c. The third power storage device 16c is connected by the disconnection device 28c to the fifth inverter 15e and the seventh inverter 15g. Thus, DC power is supplied from the third power storage device 16c to the fifth inverter 15e and the seventh inverter 15g.

The second power generation device 14b is connected by the disconnection device 26b to the second power supply circuit 18b and the first connection circuit 22a. Thus, DC power is supplied from the second power generation device 14b to the second inverter 15b and the fourth inverter 15d. The second power generation device 14b is connected by the disconnection device 26d to the fourth power supply circuit 18d and the second connection circuit 22b. Thus, DC power is supplied from the second power generation device 14b to the sixth inverter 15f and the eighth inverter 15h.

The second power storage device 16b is connected by the disconnection device 28b to the second inverter 15b and the fourth inverter 15d. Thus, DC power is supplied from the second power storage device 16b to the second inverter 15b and the fourth inverter 15d. The fourth power storage device 16d is connected by the disconnection device 28d to the sixth inverter 15f and the eighth inverter 15h. Thus, DC power is supplied from the fourth power storage device 16d to the sixth inverter 15f and the eighth inverter 15h.

### [Operation of Power Supply System in Event of Abnormality]

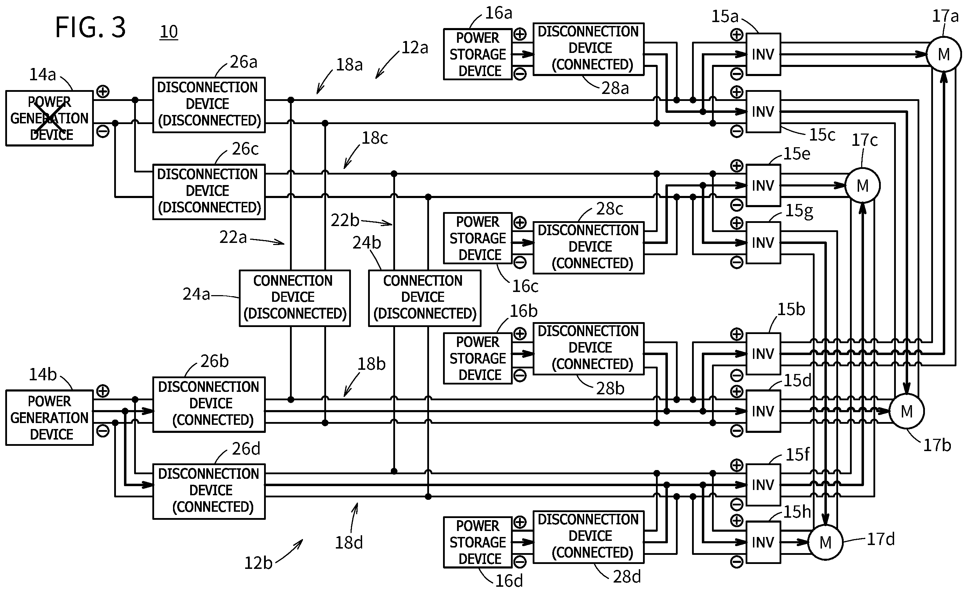

FIG. 3 to FIG. 5 are diagrams showing the operation of the power supply system 10 in the event of an abnormality in the embodiment. The arrows shown in FIG. 3 to FIG. 5 indicate electric power supply paths. FIG. 3 to FIG. 5 show the operation of the power supply system 10 in a case that supply of DC power from the first power generation device 14a to the first power supply circuit 18a and the third power supply circuit 18c is disrupted.

A state in which the supply of DC power from the first power generation device 14a to the first power supply circuit 18a and the third power supply circuit 18c is disrupted, for example, is a state in which the first power generation device 14a is stopped and the first power generation device 14a is incapable of being restarted. Further, a state in which the supply of DC power from the first power generation device 14a to the first power supply circuit 18a and the third power supply circuit 18c is disrupted, for example, is a state in which a disconnection (breaking of wire or cable) or the like has occurred between the first power generation device 14a and the disconnection device 26a, and between the first power generation device 14a and the disconnection device 26c. Further, a state in which the supply of DC power from the first power generation device 14a to the first power supply circuit 18a and the third power supply circuit 18c is disrupted, for example, is a state in which a short circuit or the like has occurred between the first power generation device 14a and the disconnection device 26a, or between the first power generation device 14a and the disconnection device 26c.

In a case that the supply of DC power from the first power generation device 14a to the first power supply circuit 18a and the third power supply circuit 18c is disrupted, then as shown in FIG. 3, the first power generation device 14a is disconnected by the disconnection device 26a from the first power supply circuit 18a and the first connection circuit 22a. Further, the first power generation device 14a is disconnected by the disconnection device 26c from the third power supply circuit 18c and the second connection circuit 22b.

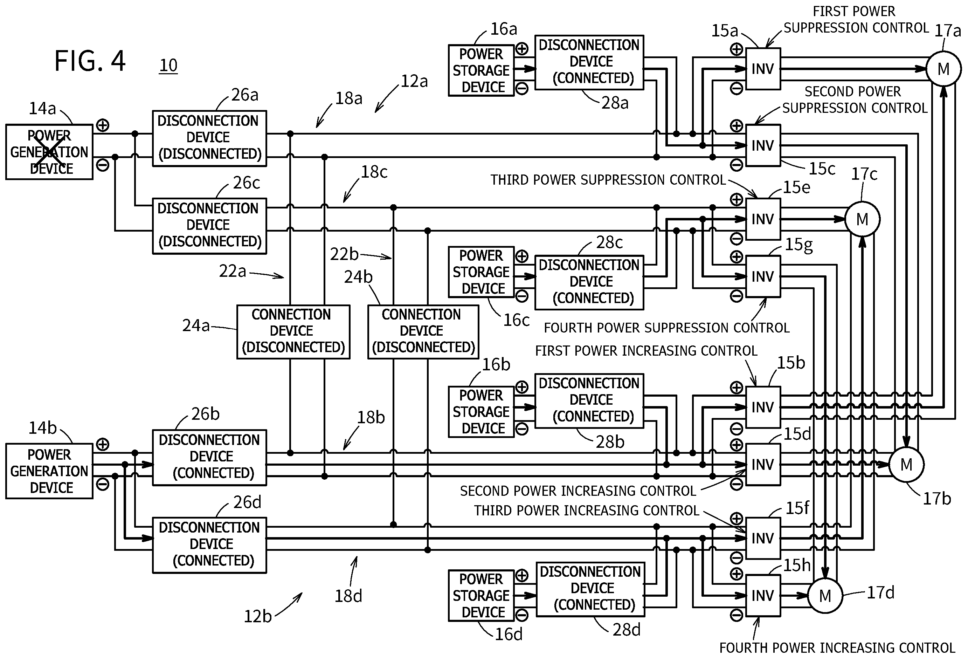

In a case that there is a difference between the voltage of the first power supply subsystem 12a and the voltage of the second power supply subsystem 12b, then as shown in FIG. 4, the power supply system 10 of the present embodiment executes a first power suppression control on the first inverter 15a. Further, the power supply system 10 executes a second power suppression control on the third inverter 15c. Furthermore, the power supply system 10 executes a third power suppression control on the fifth inverter 15e. Still further, the power supply system 10 executes a fourth power suppression control on the seventh inverter 15g.

In a case that there is a difference between the voltage of the first power supply subsystem 12a and the voltage of the second power supply subsystem 12b, then as shown in FIG. 4, the power supply system 10 of the present embodiment executes a first power increasing control on the second inverter 15b. Further, the power supply system 10 executes a second power increasing control on the fourth inverter 15d. Furthermore, the power supply system 10 executes a third power increasing control on the sixth inverter 15f. Still further, the power supply system 10 executes a fourth power increasing control on the eighth inverter 15h.

The aforementioned power suppression controls and power increasing controls are executed in order to cause the voltage of the first power supply subsystem 12a and the voltage of the second power supply subsystem 12b to approximate one another. A description will be given later concerning the approximation of the voltage of the first power supply subsystem 12a and the voltage of the second power supply subsystem 12b.

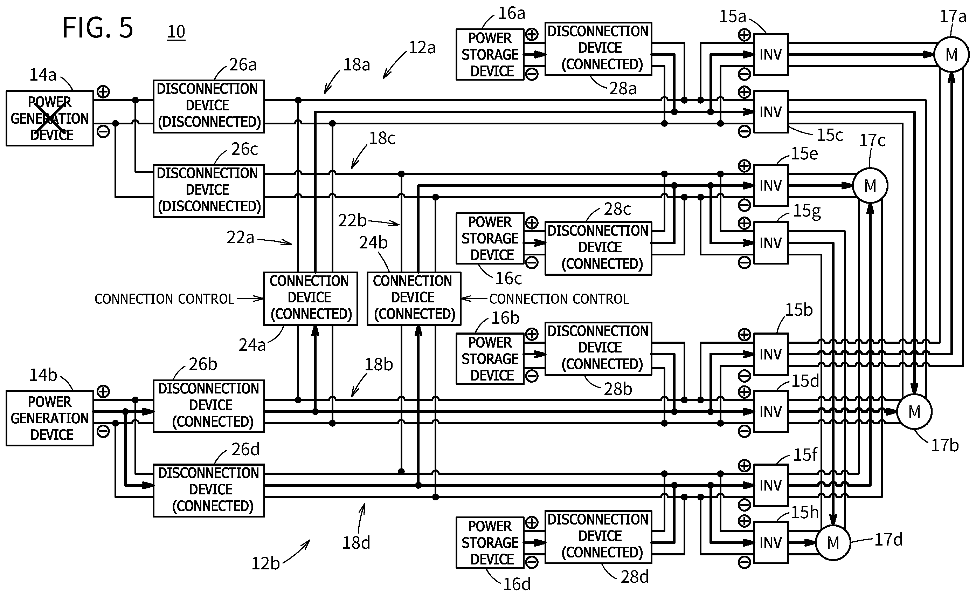

After the voltage of the first power supply subsystem 12a and the voltage of the second power supply subsystem 12b have been made to approximate one another, then as shown in FIG. 5, the power supply system 10 of the present embodiment executes a connection control on the first connection device 24a. Thus, the first power supply circuit 18a and the second power supply circuit 18b are connected by the first connection device 24a. Consequently, DC power is supplied from the second power generation device 14b to the first power supply circuit 18a. Further, the power supply system 10 executes a connection control on the second connection device 24b. Thus, the third power supply circuit 18c and the fourth power supply circuit 18d are connected by the second connection device 24b. Consequently, DC power is supplied from the second power generation device 14b to the third power supply circuit 18c.

### [Configuration of Control Device]

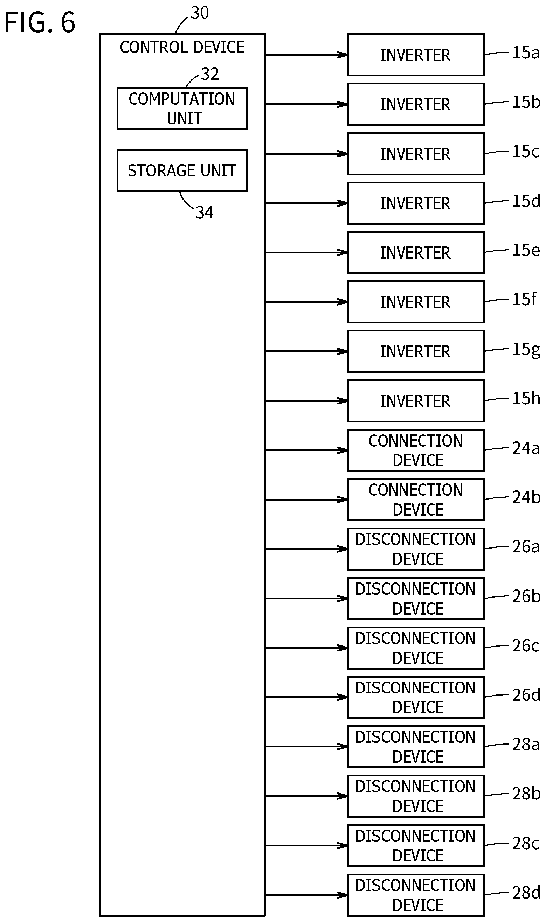

The power supply system 10 is equipped with a control device 30. FIG. 6 is a control block diagram of the control device 30 in the present embodiment.

The control device 30 includes a computation unit 32 and a storage unit 34. The computation unit 32 includes a processor such as a CPU (Central Processing Unit) or a GPU (Graphics Processing Unit) or the like. The computation unit 32 controls each of devices by executing a program that is stored in the storage unit 34. At least a portion of the computation unit 32 may be realized by an integrated circuit such as an ASIC (Application Specific Integrated Circuit) or an FPGA (Field-Programmable Gate Array) or the like. At least a portion of the computation unit 32 may be realized by an electronic circuit including a discrete device.

The storage unit 34 is made up of a volatile memory and a non-volatile memory, which are computer readable non-transitory storage media. The volatile memory, for example, is a RAM (Random Access Memory) or the like. The non-volatile memory, for example, is a ROM (Read Only Memory), a flash memory, or the like. Data and the like are stored, for example, in the volatile memory. A program, a table, a map, and the like are stored, for example, in the non-volatile memory. At least a portion of the storage unit 34 may be provided in the above-described processor, the integrated circuit, or the like.

The control device 30 controls each of the first inverter 15a, the second inverter 15b, the third inverter 15c, the fourth inverter 15d, the fifth inverter 15e, the sixth inverter 15f, the seventh inverter 15g, and the eighth inverter 15h. Further, the control device 30 also controls each of the first connection device 24a, the second connection device 24b, the disconnection devices 26a to 26d, and the disconnection devices 28a to 28d. The control device 30 may also be provided in a plurality. For example, one control device 30 may control each of the first inverter 15a, the second inverter 15b, the third inverter 15c, the fourth inverter 15d, the fifth inverter 15e, the sixth inverter 15f, the seventh inverter 15g, and the eighth inverter 15h. Further, another control device 30 may control each of the first connection device 24a, the second connection device 24b, the disconnection devices 26a to 26d, and the disconnection devices 28a to 28d.

### [Failsafe Control]

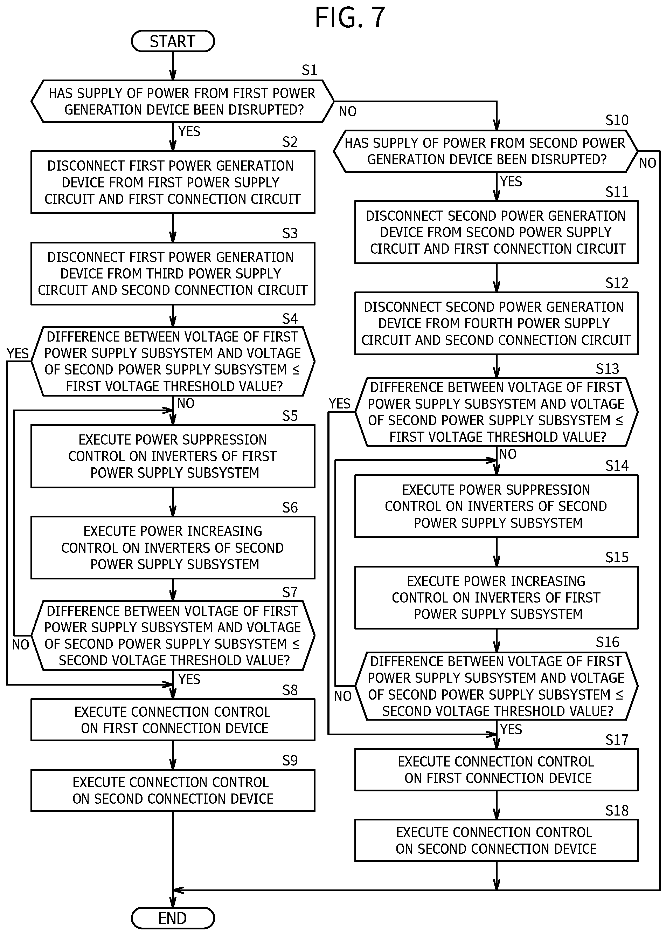

FIG. 7 is a flowchart showing a failsafe control of the present embodiment. The failsafe control is repeatedly executed at a predetermined cycle.

In step S1, the control device 30 determines whether or not the supply of DC power from the first power generation device 14a to the first power supply circuit 18a and the third power supply circuit 18c has been disrupted. In a case it is determined that the supply of DC power from the first power generation device 14a to the first power supply circuit 18a and the third power supply circuit 18c has been disrupted (step S1: YES), the process transitions to step S2.

In step S2, the control device 30 controls the disconnection device 26a and thereby disconnects the first power generation device 14a from the first power supply circuit 18a and the first connection circuit 22a. Thereafter, the process transitions to step S3.

In step S3, the control device 30 controls the disconnection device 26c, and thereby disconnects the first power generation device 14a from the third power supply circuit 18c and the second connection circuit 22b. Thereafter, the process transitions to step S4.

In step S4, the control device 30 determines whether or not the difference between the voltage of the first power supply subsystem 12a and the voltage of the second power supply subsystem 12b is less than or equal to a first voltage threshold value. In a case it is determined that the difference between the voltage of the first power supply subsystem 12a and the voltage of the second power supply subsystem 12b is greater than the first voltage threshold value (step S4: NO), the process transitions to step S5. The first voltage threshold value is determined beforehand in accordance with the magnitude of electric current that each of the equipment and each of the constituent devices of the power supply system 10 can withstand.

In step S5, the control device 30 executes the first power suppression control on the first inverter 15a. Further, the control device 30 executes the second power suppression control on the third inverter 15c. Furthermore, the control device 30 executes the third power suppression control on the fifth inverter 15e. Still further, the control device 30 executes the fourth power suppression control on the seventh inverter 15g. Thereafter, the process transitions to step S6.

The first power suppression control is a control that reduces the ratio (hereinafter, a first ratio) of electric power (hereinafter, a first electric power) that is supplied from the first inverter 15a to the first motor 17a with respect to the electric power consumption of the first motor 17a to be smaller than the first ratio prior to the supply of DC power from the first power generation device 14a to the first power supply circuit 18a being disrupted.

The second power suppression control is a control that reduces the ratio (hereinafter, a third ratio) of electric power (hereinafter, a third electric power) that is supplied from the third inverter 15c to the second motor 17b with respect to the electric power consumption of the second motor 17b to be smaller than the third ratio prior to the supply of DC power from the first power generation device 14a to the first power supply circuit 18a being disrupted.

The third power suppression control is a control that reduces the ratio (hereinafter, a fifth ratio) of electric power (hereinafter, a fifth electric power) that is supplied from the fifth inverter 15e to the third motor 17c with respect to the electric power consumption of the third motor 17c to be smaller than the fifth ratio prior to the supply of DC power from the first power generation device 14a to the third power supply circuit 18c being disrupted.

The fourth power suppression control is a control that reduces the ratio (hereinafter, a seventh ratio) of electric power (hereinafter, a seventh electric power) that is supplied from the seventh inverter 15g to the fourth motor 17d with respect to the electric power consumption of the fourth motor 17d to be smaller than the seventh ratio prior to the supply of DC power from the first power generation device 14a to the third power supply circuit 18c being disrupted.

In step S6, the control device 30 executes the first power increasing control on the second inverter 15b. Further, the control device 30 executes the second power increasing control on the fourth inverter 15d. Furthermore, the control device 30 executes the third power increasing control on the sixth inverter 15f. Still further, the control device 30 executes the fourth power increasing control on the eighth inverter 15h. Thereafter, the process transitions to step S7.

The first power increasing control is a control that increases the ratio (hereinafter, a second ratio) of electric power (hereinafter, a second electric power) that is supplied from the second inverter 15b to the first motor 17a with respect to the electric power consumption of the first motor 17a to be larger than the second ratio prior to the supply of DC power from the first power generation device 14a to the first power supply circuit 18a being disrupted.

The magnitude of the first ratio that has become smaller due to the aforementioned first power suppression control, is equal to the magnitude of the second ratio that has become larger due to the first power increasing control. Thus, the first power suppression control and the first power increasing control are executed, whereby an increase or a decrease in the output torque of the first motor 17a can be suppressed. The difference between the magnitude of the first ratio that has become smaller due to the first power suppression control, and the magnitude of the second ratio that has become larger due to the first power increasing control, may be less than or equal to a predetermined value.

The second power increasing control is a control that increases the ratio (hereinafter, a fourth ratio) of electric power (hereinafter, a fourth electric power) that is supplied from the fourth inverter 15d to the second motor 17b with respect to the electric power consumption of the second motor 17b to be larger than the fourth ratio prior to the supply of DC power from the first power generation device 14a to the first power supply circuit 18a being disrupted.

The magnitude of the third ratio that has become smaller due to the aforementioned second power suppression control, is equal to the magnitude of the fourth ratio that has become larger due to the second power increasing control. Thus, the second power suppression control and the second power increasing control are executed, whereby an increase or a decrease in the output torque of the second motor 17b can be suppressed. The difference between the magnitude of the third ratio that has become smaller due to the second power suppression control, and the magnitude of the fourth ratio that has become larger due to the second power increasing control, may be less than or equal to a predetermined value.

The third power increasing control is a control that increases the ratio (hereinafter, a sixth ratio) of electric power (hereinafter, a sixth electric power) that is supplied from the sixth inverter 15f to the third motor 17c with respect to the electric power consumption of the third motor 17c to be larger than the sixth ratio prior to the supply of DC power from the first power generation device 14a to the third power supply circuit 18c being disrupted.

The magnitude of the fifth ratio that has become smaller due to the aforementioned third power suppression control, is equal to the magnitude of the sixth ratio that has become larger due to the third power increasing control. Thus, the third power suppression control and the third power increasing control are executed, whereby an increase or a decrease in the output torque of the third motor 17c can be suppressed. The difference between the magnitude of the fifth ratio that has become smaller due to the third power suppression control, and the magnitude of the sixth ratio that has become larger due to the third power increasing control, may be less than or equal to a predetermined value.

The fourth power increasing control is a control that increases the ratio (hereinafter, an eighth ratio) of electric power (hereinafter, an eighth electric power) that is supplied from the eighth inverter 15h to the fourth motor 17d with respect to the electric power consumption of the fourth motor 17d to be smaller than the eighth ratio prior to the supply of DC power from the first power generation device 14a to the third power supply circuit 18c being disrupted.

The magnitude of the seventh ratio that has become smaller due to the aforementioned fourth power suppression control, is equal to the magnitude of the eighth ratio that has become larger due to the fourth power increasing control. Thus, the fourth power suppression control and the fourth power increasing control are executed, whereby an increase or a decrease in the output torque of the fourth motor 17d can be suppressed. The difference between the magnitude of the seventh ratio that has become smaller due to the fourth power suppression control, and the magnitude of the eighth ratio that has become larger due to the fourth power increasing control, may be less than or equal to a predetermined value.

In step S7, the control device 30 determines whether or not the difference between the voltage of the first power supply subsystem 12a and the voltage of the second power supply subsystem 12b is less than or equal to a second voltage threshold value. In a case it is determined that the difference between the voltage of the first power supply subsystem 12a and the voltage of the second power supply subsystem 12b is greater than the second voltage threshold value (step S7: NO), the process returns to step S5. The second voltage threshold value is determined beforehand in accordance with the magnitude of electric current that each of the equipment and each of the constituent devices of the power supply system 10 can withstand. The second voltage threshold value may be the same as the aforementioned first voltage threshold value, or may be a different value from the first voltage threshold value.

In the aforementioned step S4, in a case it is determined that the difference between the voltage of the first power supply subsystem 12a and the voltage of the second power supply subsystem 12b is less than or equal to the first voltage threshold value (step S4: YES), or, in a case it is determined in the immediately preceding step S7 that the difference between the voltage of the first power supply subsystem 12a and the voltage of the second power supply subsystem 12b is less than or equal to the second voltage threshold value (step S7: YES), the process transitions to step S8.

In step S8, the control device 30 executes a connection control on the first connection device 24a. Thus, via the first connection circuit 22a, the first power supply circuit 18a and the second power supply circuit 18b are connected. Thereafter, the process transitions to step S9.

In step S9, the control device 30 executes a connection control on the second connection device 24b. Thus, via the second connection circuit 22b, the third power supply circuit 18c and the fourth power supply circuit 18d are connected. Thereafter, the failsafe control comes to an end.

In the above-described step S1, in a case it is determined that DC power is being supplied from the first power generation device 14a to the first power supply circuit 18a and the third power supply circuit 18c (step S1: NO), the process transitions to step S10.

In step S10, the control device 30 determines whether or not the supply of electric power from the second power generation device 14b to the second power supply circuit 18b and the fourth power supply circuit 18d has been disrupted. In a case it is determined that the supply of electric power from the second power generation device 14b to the second power supply circuit 18b and the fourth power supply circuit 18d has been disrupted (step S10: YES), the process transitions to step S11. In a case it is determined that electric power is being supplied from the second power generation device 14b to the second power supply circuit 18b and the fourth power supply circuit 18d (step S10: NO), the failsafe control comes to an end.

In step S11, the control device 30 controls the disconnection device 26b, and thereby disconnects the second power generation device 14b from the second power supply circuit 18b and the first connection circuit 22a. Thereafter, the process transitions to step S12.

In step S12, the control device 30 controls the disconnection device 26d, and thereby disconnects the second power generation device 14b from the fourth power supply circuit 18d and the second connection circuit 22b. Thereafter, the process transitions to step S13.

In step S13, the control device 30 determines whether or not the difference between the voltage of the first power supply subsystem 12a and the voltage of the second power supply subsystem 12b is less than or equal to the first voltage threshold value. In a case it is determined that the difference between the voltage of the first power supply subsystem 12a and the voltage of the second power supply subsystem 12b is greater than the first voltage threshold value (step S13: NO), the process transitions to step S14.

In step S14, the control device 30 executes a fifth power suppression control on the second inverter 15b. Further, the control device 30 executes a sixth power suppression control on the fourth inverter 15d. Furthermore, the control device 30 executes a seventh power suppression control on the sixth inverter 15f. Still further, the control device 30 executes an eighth power suppression control on the eighth inverter 15h. Thereafter, the process transitions to step S15.

The fifth power suppression control is a control that reduces the second ratio of the second electric power that is supplied from the second inverter 15b to the first motor 17a with respect to the electric power consumption of the first motor 17a to be smaller than the second ratio prior to the supply of DC power from the second power generation device 14b to the second power supply circuit 18b being disrupted.

The sixth power suppression control is a control that reduces the fourth ratio of the fourth electric power that is supplied from the fourth inverter 15d to the second motor 17b with respect to the electric power consumption of the second motor 17b to be smaller than the fourth ratio prior to the supply of DC power from the second power generation device 14b to the second power supply circuit 18b being disrupted.

The seventh power suppression control is a control that reduces the sixth ratio of the sixth electric power that is supplied from the sixth inverter 15f to the third motor 17c with respect to the electric power consumption of the third motor 17c to be smaller than the six ratio prior to the supply of DC power from the second power generation device 14b to the fourth supply power circuit 18d being disrupted.

The eighth power suppression control is a control that reduces the eighth ratio of the eighth electric power that is supplied from the eighth inverter 15h to the fourth motor 17d with respect to the electric power consumption of the fourth motor 17d to be smaller than the eighth ratio prior to the supply of DC power from the second power generation device 14b to the fourth power supply circuit 18d being disrupted.

In step S15, the control device 30 executes a fifth power increasing control on the first inverter 15a. Further, the control device 30 executes a sixth power increasing control on the third inverter 15c. Furthermore, the control device 30 executes a seventh power increasing control on the fifth inverter 15e. Still further, the control device 30 executes an eighth power increasing control on the seventh inverter 15g. Thereafter, the process transitions to step S16.

The fifth power increasing control is a control that increases the first ratio of the first electric power that is supplied from the first inverter 15a to the first motor 17a with respect to the electric power consumption of the first motor 17a to be larger than the first ratio prior to the supply of DC power from the second power generation device 14b to the second power supply circuit 18b being disrupted.

The magnitude of the second ratio that has become smaller due to the aforementioned fifth power suppression control, is equal to the magnitude of the first ratio that has become larger due to the fifth power increasing control. Thus, the fifth power suppression control and the fifth power increasing control are executed, whereby an increase or a decrease in the output torque of the first motor 17a can be suppressed. The difference between the magnitude of the second ratio that has become smaller due to the fifth power suppression control, and the magnitude of the first ratio that has become larger due to the fifth power increasing control, may be less than or equal to a predetermined value.

The sixth power increasing control is a control that increases the third ratio of the third electric power that is supplied from the third inverter 15c to the second motor 17b with respect to the electric power consumption of the second motor 17b to be larger than the third ratio prior to the supply of DC power from the second power generation device 14b to the second power supply circuit 18b being disrupted.

The magnitude of the fourth ratio that has become smaller due to the aforementioned sixth power suppression control, is equal to the magnitude of the third ratio that has become larger due to the sixth power increasing control. Thus, the sixth power suppression control and the sixth power increasing control are executed, whereby an increase or a decrease in the output torque of the second motor 17b can be suppressed. The difference between the magnitude of the fourth ratio that has become smaller due to the sixth power suppression control, and the magnitude of the third ratio that has become larger due to the sixth power increasing control, may be less than or equal to a predetermined value.

The seventh power increasing control is a control that increases the fifth ratio of the fifth electric power that is supplied from the fifth inverter 15e to the third motor 17c with respect to the electric power consumption of the third motor 17c to be larger than the fifth ratio prior to the supply of DC power from the second power generation device 14b to the fourth power supply circuit 18d being disrupted.

The magnitude of the sixth ratio that has become smaller due to the aforementioned seventh power suppression control, is equal to the magnitude of the fifth ratio that has become larger due to the seventh power increasing control. Thus, the seventh power suppression control and the seventh power increasing control are executed, whereby an increase or a decrease in the output torque of the third motor 17c can be suppressed. The difference between the magnitude of the sixth ratio that has become smaller due to the seventh power suppression control, and the magnitude of the fifth ratio that has become larger due to the seventh power increasing control, may be less than or equal to a predetermined value.

The eighth power increasing control is a control that increases the seventh ratio of the seventh electric power that is supplied from the seventh inverter 15g to the fourth motor 17d with respect to the electric power consumption of the fourth motor 17d to be larger than the seventh ratio prior to the supply of DC power from the second power generation device 14b to the fourth power supply circuit 18d being disrupted.

The magnitude of the eighth ratio that has become smaller due to the aforementioned eighth power suppression control, is equal to the magnitude of the seventh ratio that has become larger due to the eighth power increasing control. Thus, the eighth power suppression control and the eighth power increasing control are executed, whereby an increase or a decrease in the output torque of the fourth motor 17d can be suppressed. The difference between the magnitude of the eighth ratio that has become smaller due to the eighth power suppression control, and the magnitude of the seventh ratio that has become larger due to the eighth power increasing control, may be less than or equal to a predetermined value.

In step S16, the control device 30 determines whether or not the difference between the voltage of the first power supply subsystem 12a and the voltage of the second power supply subsystem 12b is less than or equal to the second voltage threshold value. In a case it is determined that the difference between the voltage of the first power supply subsystem 12a and the voltage of the second power supply subsystem 12b is greater than the second voltage threshold value (step S16: NO), the process returns to step S14.

In the aforementioned step S13, in a case it is determined that the difference between the voltage of the first power supply subsystem 12a and the voltage of the second power supply subsystem 12b is less than or equal to the first voltage threshold value (step S13: YES), or, in a case it is determined in the immediately preceding step S16 that the difference between the voltage of the first power supply subsystem 12a and the voltage of the second power supply subsystem 12b is less than or equal to the second voltage threshold value (step S16: YES), the process transitions to step S17.

In step S17, the control device 30 executes a connection control on the first connection device 24a. Thus, via the first connection circuit 22a, the first power supply circuit 18a and the second power supply circuit 18b are connected. Thereafter, the process transitions to step S18.

In step S18, the control device 30 executes a connection control on the second connection device 24b. Thus, via the second connection circuit 22b, the third power supply circuit 18c and the fourth power supply circuit 18d are connected. Thereafter, the failsafe control comes to an end.

### [Approximation Between Voltage of First Power Supply Subsystem and Voltage of Second Power Supply Subsystem]

In the power supply system 10 of the present embodiment, in a case that there is a difference between the voltage of the first power supply subsystem 12a and the voltage of the second power supply subsystem 12b, then prior to the first power supply subsystem 12a and the second power supply subsystem 12b being connected to each other, the voltage of the first power supply subsystem 12a and the voltage of the second power supply subsystem 12b are made to approximate one another.

A description will be given below concerning a state of the power supply system 10 in a case that the first power supply subsystem 12a and the second power supply subsystem 12b are connected in a state in which there is a difference between the voltage of the first power supply subsystem 12a and the voltage of the second power supply subsystem 12b.

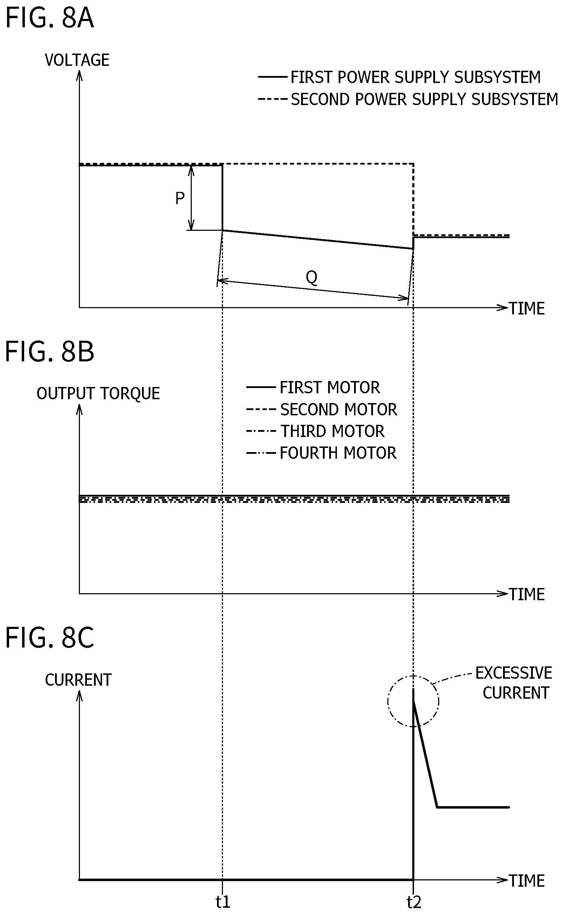

FIG. 8A, FIG. 8B, and FIG. 8C are graphs each showing the change over time in a state of the power supply system 10 in the period before and after the first power supply subsystem 12a and the second power supply subsystem 12b are connected. The graph of FIG. 8A shows a change over time of the voltage of the first power supply subsystem 12a and a change over time of the voltage of the second power supply subsystem 12b. The graph of FIG. 8B shows changes over time in the output torque of the first motor 17a, the output torque of the second motor 17b, the output torque of the third motor 17c, and the output torque of the fourth motor 17d. The graph of FIG. 8C shows a change over time of electric current flowing through the first connection circuit 22a and the second connection circuit 22b. Each of the graphs in FIG. 8A to FIG. 8C shows schematically the changes over time of the voltage, the electric power, and the electric current.

At time t1, the supply of DC power from the first power generation device 14a to the first power supply circuit 18a and the third power supply circuit 18c is disrupted. At time t2, the first power supply circuit 18a and the second power supply circuit 18b are connected, and the third power supply circuit 18c and the fourth power supply circuit 18d are connected. In the periods shown in each of the graphs of FIG. 8A to FIG. 8C, the electric power consumption of the first motor 17a, the electric power consumption of the second motor 17b, the electric power consumption of the third motor 17c, and the electric power consumption of the fourth motor 17d are constant.

In the period prior to time t1, the output power of the first power generation device 14a is equal to one half of the sum of the electric power consumption of the first motor 17a, the electric power consumption of the second motor 17b, the electric power consumption of the third motor 17c, and the electric power consumption of the fourth motor 17d. Further, in the period prior to time t1, the output electric power of the second power generation device 14b is equal to one half of the sum of the electric power consumption of the first motor 17a, the electric power consumption of the second motor 17b, the electric power consumption of the third motor 17c, and the electric power consumption of the fourth motor 17d. Therefore, the first power storage device 16a, the second power storage device 16b, the third power storage device 16c, and the fourth power storage device 16d are not undergoing charging or discharging.

At time t1, the supply of DC power from the first power generation device 14a to the first power supply circuit 18a and the third power supply circuit 18c is disrupted, and as a result, the first power storage device 16a and the third power storage device 16c start discharging at time t1. Due to the discharging of the first power storage device 16a being started, the output power of the first power storage device 16a increases, and the output current of the first power storage device 16a becomes larger. Therefore, the amount of voltage drop due to the internal resistance in the first power storage device 16a becomes larger, and the output voltage of the first power storage device 16a decreases accordingly. Further, due to the discharging of the third power storage device 16c being started, the output power of the third power storage device 16c increases, and the output current of the third power storage device 16c becomes larger. Therefore, the amount of voltage drop due to the internal resistance in the third power storage device 16c becomes larger, and the output voltage of the third power storage device 16c decreases accordingly. That is, the voltage of the first power supply subsystem 12a decreases (the portion indicated by the symbol P in FIG. 8A).

Furthermore, in the period from time t1 to time t2, electric power from the first power storage device 16a is supplied to the first inverter 15a and the third inverter 15c, and electric power from the third power storage device 16c is supplied to the fifth inverter 15e and the seventh inverter 15g. That is, in the period from time t1 to time t2, the first power storage device 16a and the third power storage device 16c discharge electricity, and as a result, the SOC (State of Charge) of the first power storage device 16a and the SOC of the third power storage device 16c gradually decrease. Accompanying the decrease in the SOC, an open circuit voltage of the first power storage device 16a and an open circuit voltage of the third power storage device 16c decrease, and the output voltage of the first power storage device 16a and the output voltage of the third power storage device 16c gradually decrease. That is, the voltage of the first power supply subsystem 12a gradually decreases (the portion indicated by the symbol Q in FIG. 8A).

On the other hand, in the period from time t1 to time t2, electric power from the second power generation device 14b is supplied to the second inverter 15b, the fourth inverter 15d, the sixth inverter 15f, and the eighth inverter 15h. That is, in the period from time t1 to time t2, the second power storage device 16b and the fourth power storage device 16d are not subjected to charging or discharging. Therefore, the output current of the second power storage device 16b and the output current of the fourth power storage device 16d do not change, and the amount of voltage drop due to the internal resistance in the second power storage device 16b and the fourth power storage device 16d does not change. Furthermore, the SOC of the second power storage device 16b and the SOC of the fourth power storage device 16d are maintained. Therefore, the output voltage of the second power storage device 16b and the output voltage of the fourth power storage device 16d are kept unchanged. That is, the voltage of the second power supply subsystem 12b is kept unchanged.

Since the voltage of the first power supply subsystem 12a decreases while the voltage of the second power supply subsystem 12b is maintained, the difference between the voltage of the first power supply subsystem 12a and the voltage of the second power supply subsystem 12b becomes larger. Therefore, at time t2, when the first power supply circuit 18a and the second power supply circuit 18b are connected, and the third power supply circuit 18c and the fourth power supply circuit 18d are connected, an excessive current flows in the power supply system 10. Due to such an excessive current, a concern arises in that damage may occur to each of the equipment and each of the constituent devices in the power supply system 10. Furthermore, in a case that each of the equipment and each of the constituent devices of the power supply system 10 are designed to withstand such an excessive current, there is a problem that the manufacturing cost of the power supply system 10 increases.

A description will be given below concerning a state of the power supply system 10 in a case in which, after the voltage of the first power supply subsystem 12a and the voltage of the second power supply subsystem 12b have been made to approximate one another, the first power supply subsystem 12a and the second power supply subsystem 12b are connected.

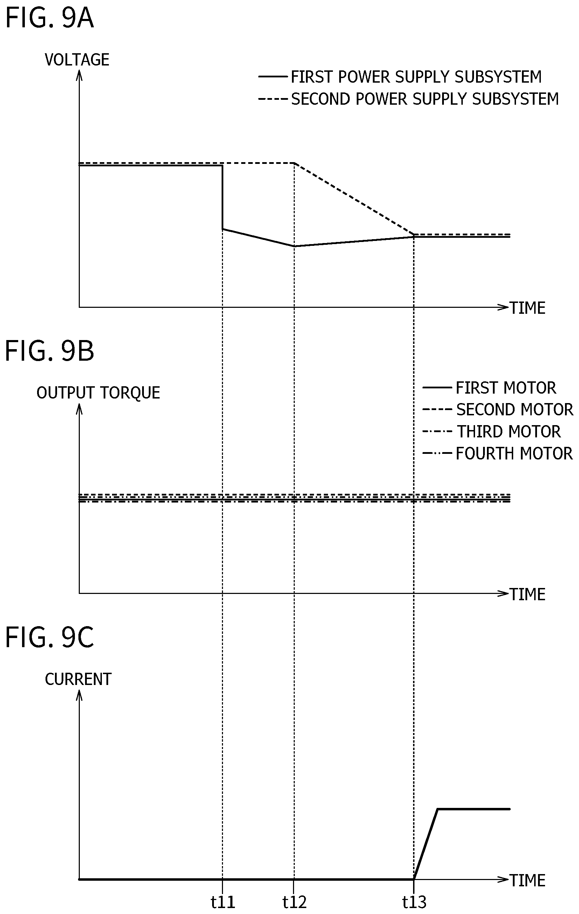

FIG. 9A, FIG. 9B, and FIG. 9C are graphs each showing the change over time in a state of the power supply system 10 in a period before and after the first power supply subsystem 12a and the second power supply subsystem 12b are connected. The graph of FIG. 9A shows a change over time of the voltage of the first power supply subsystem 12a and a change over time of the voltage of the second power supply subsystem 12b. The graph of FIG. 9B shows changes over time in the output torque of the first motor 17a, the output torque of the second motor 17b, the output torque of the third motor 17c, and the output torque of the fourth motor 17d. The graph of FIG. 9C shows a change over time of the current flowing through the first connection circuit 22a and the second connection circuit 22b. The graphs in FIG. 9A to FIG. 9C schematically show the changes over time of the voltage, the electric power, and the current, respectively.

At time t11, the supply of DC power from the first power generation device 14a to the first power supply circuit 18a and the third power supply circuit 18c is disrupted. At time t12, the first power suppression control is executed on the first inverter 15a, the second power suppression control is executed on the third inverter 15c, the third power suppression control is executed on the fifth inverter 15e, and the fourth power suppression control is executed on the seventh inverter 15g. Further, at time t12, the first power increasing control is executed on the second inverter 15b, the second power increasing control is executed on the fourth inverter 15d, the third power increasing control is executed on the sixth inverter 15f, and the fourth power increasing control is executed on the eighth inverter 15h.

In the period prior to time t11, the output power of the first power generation device 14a is equal to one half of the sum of the electric power consumption of the first motor 17a, the electric power consumption of the second motor 17b, the electric power consumption of the third motor 17c, and the electric power consumption of the fourth motor 17d. Further, in the period prior to time t11, the output power of the second power generation device 14b is equal to one half of the sum of the electric power consumption of the first motor 17a, the electric power consumption of the second motor 17b, the electric power consumption of the third motor 17c, and the electric power consumption of the fourth motor 17d. Therefore, the first power storage device 16a, the second power storage device 16b, the third power storage device 16c, and the fourth power storage device 16d are not undergoing charging or discharging.

Similar to the period from time t1 to time t2 of FIG. 8A, in the period from time t11 to time t12 of FIG. 9A, the voltage of the first power supply subsystem 12a decreases, and the voltage of the second power supply subsystem 12b is maintained. Therefore, the difference between the voltage of the first power supply subsystem 12a and the voltage of the second power supply subsystem 12b becomes larger.

In the power supply system 10 of the present embodiment, at time t12, the first power suppression control is executed on the first inverter 15a, the second power suppression control is executed on the third inverter 15c, the third power suppression control is executed on the fifth inverter 15e, and the fourth power suppression control is executed on the seventh inverter 15g.

In accordance with the first power suppression control and the second power suppression control, the output power of the first power storage device 16a gradually becomes smaller, and the output current of the first power storage device 16a gradually becomes smaller. Therefore, the amount of voltage drop due to the internal resistance in the first power storage device 16a gradually becomes smaller. Further, in accordance with the third power suppression control and the fourth power suppression control, the output power of the third power storage device 16c gradually becomes smaller, and the output current of the third power storage device 16c gradually becomes smaller. Therefore, the amount of voltage drop due to the internal resistance in the third power storage device 16c gradually becomes smaller.

Furthermore, in comparison with the period from time t11 to time t12, in the period from time t12 to time t13, power supplied from the first inverter 15a to the first motor 17a decreases, and power supplied from the third inverter 15c to the second motor 17b decreases. Therefore, a decrease in the SOC of the first power storage device 16a is suppressed. Similarly, in comparison with the period from time t11 to time t12, in the period from time t12 to time t13, power supplied from the fifth inverter 15e to the third motor 17c decreases, and power supplied from the seventh inverter 15g to the fourth motor 17d decreases. Therefore, a decrease in the SOC of the third power storage device 16c is suppressed.

As noted previously, the amount of voltage drop due to the internal resistance in the first power storage device 16a and the third power storage device 16c becomes smaller, and furthermore, the decrease in the SOC of the first power storage device 16a and the SOC of the third power storage device 16c is suppressed, and as a result, a decrease in the output voltage of the first power storage device 16a and the output voltage of the third power storage device 16c is suppressed. That is, a decrease in the voltage of the first power supply subsystem 12a is suppressed.

Further, in the power supply system 10 of the present embodiment, at time t12, the first power increasing control is executed on the second inverter 15b, the second power increasing control is executed on the fourth inverter 15d, the third power increasing control is executed on the sixth inverter 15f, and the fourth power increasing control is executed on the eighth inverter 15h.

The first power increasing control, the second power increasing control, the third power increasing control, and the fourth power increasing control result in respective increases in the required electric power of each of the second inverter 15b, the fourth inverter 15d, the sixth inverter 15f, and the eighth inverter 15h. Therefore, the second power generation device 14b is controlled in a manner so as to increase the output power thereof. However, since the response speed of the output power of the second power generation device 14b is relatively slow, for a while, the output power of the second power generation device 14b will be insufficient for the total of the required electric powers of the second inverter 15b, the fourth inverter 15d, the sixth inverter 15f, and the eighth inverter 15h.

In order to compensate for the lack of power, the second power storage device 16b supplies power to the second inverter 15b and the fourth inverter 15d, and the fourth power storage device 16d supplies power to the sixth inverter 15f and the eighth inverter 15h. With the gradually-increasing required electric power of each of the second inverter 15b and the fourth inverter 15d, the output power of the second power storage device 16b gradually increases, and the output current of the second power storage device 16b gradually increases. Therefore, the amount of voltage drop due to the internal resistance in the second power storage device 16b gradually becomes larger. Further, with the gradually-increasing required electric power of each of the sixth inverter 15f and the eighth inverter 15h, the output power of the fourth power storage device 16d gradually increases, and the output current of the fourth power storage device 16d gradually increases. Therefore, the amount of voltage drop due to the internal resistance in the fourth power storage device 16d gradually becomes larger.

Furthermore, in the period from time t12 to time t13, the second power storage device 16b and the fourth power storage device 16d are discharged, whereby a decrease in the SOC of the second power storage device 16b and the SOC of the fourth power storage device 16d is caused.

As noted previously, since the amount of voltage drop due to the internal resistance in the second power storage device 16b and the fourth power storage device 16d becomes larger, and furthermore, the decrease in the SOC of the second power storage device 16b and the SOC of the fourth power storage device 16d is caused, a decrease in the output voltage of the second power storage device 16b and the output voltage of the fourth power storage device 16d is promoted. That is, a decrease in the voltage of the second power supply subsystem 12b is promoted.

By the decrease in the voltage of the second power supply subsystem 12b being promoted, and the decrease in the voltage of the first power supply subsystem 12a being suppressed, it is possible to cause the voltage of the second power supply subsystem 12b to be closer to the voltage of the first power supply subsystem 12a. At time t13 at which the voltage of the first power supply subsystem 12a and the voltage of the second power supply subsystem 12b have approximated one another, the first power supply circuit 18a and the second power supply circuit 18b are connected, and the third power supply circuit 18c and the fourth power supply circuit 18d are connected. In accordance with this feature, it is possible to prevent an excessive electric current from flowing in the power supply system 10. Therefore, damage to each of the equipment and each of the constituent devices of the power supply system 10 is suppressed. Further, there is no need to design each of the equipment and each of the constituent devices of the power supply system 10 so as to withstand such an excessive current, and the manufacturing cost of the power supply system 10 can be suppressed.

Moreover, in a case that the first power suppression control is executed on the first inverter 15a, the first ratio of the first electric power supplied from the first inverter 15a to the first motor 17a with respect to the electric power consumption of the first motor 17a decreases. However, by the first power increasing control being executed on the second inverter 15b, the second ratio of the second electric power supplied from the second inverter 15b to the first motor 17a with respect to the electric power consumption of the first motor 17a increases. In accordance with this feature, the output torque of the first motor 17a is maintained.

Similarly, in a case that the second power suppression control is executed on the third inverter 15c, the third ratio of the third electric power supplied from the third inverter 15c to the second motor 17b with respect to the electric power consumption of the second motor 17b decreases. However, by the second power increasing control being executed on the fourth inverter 15d, the fourth ratio of the fourth electric power supplied from the fourth inverter 15d to the second motor 17b with respect to the electric power consumption of the second motor 17b increases. In accordance with this feature, the output torque of the second motor 17b is maintained.

Further, in a case that the third power suppression control is executed on the fifth inverter 15e, the fifth ratio of the fifth electric power supplied from the fifth inverter 15e to the third motor 17c with respect to the electric power consumption of the third motor 17c decreases. However, by the third power increasing control being executed on the sixth inverter 15f, the sixth ratio of the sixth electric power supplied from the sixth inverter 15f to the third motor 17c with respect to the electric power consumption of the third motor 17c increases. In accordance with this feature, the output torque of the third motor 17c is maintained.

Further, in a case that the fourth power suppression control is executed on the seventh inverter 15g, the seventh ratio of the seventh electric power supplied from the seventh inverter 15g to the fourth motor 17d with respect to the electric power consumption of the fourth motor 17d decreases. However, by the fourth power increasing control being executed on the eighth inverter 15h, the eighth ratio of the eighth electric power supplied from the eighth inverter 15h to the fourth motor 17d with respect to the electric power consumption of the fourth motor 17d increases. In accordance with this feature, the output torque of the fourth motor 17d is maintained.

The above description has been given concerning a case in which DC power from the first power generation device 14a to the first power supply circuit 18a and the third power supply circuit 18c is disrupted. However, also in a case that DC power from the second power generation device 14b to the second power supply circuit 18b and the fourth power supply circuit 18d is disrupted, after the voltage of the first power supply subsystem 12a and the voltage of the second power supply subsystem 12b have been made to approximate one another, the first power supply subsystem 12a and the second power supply subsystem 12b are connected.

In a case that the supply of DC power from the second power generation device 14b to the second power supply circuit 18b and the fourth power supply circuit 18d is disrupted, the fifth power suppression control is executed on the second inverter 15b, the sixth power suppression control is executed on the fourth inverter 15d, the seventh power suppression control is executed on the sixth inverter 15f, and the eighth power suppression control is executed on the eighth inverter 15h. Furthermore, the fifth power increasing control is executed on the first inverter 15a, the sixth power increasing control is executed on the third inverter 15c, the seventh power increasing control is executed on the fifth inverter 15e, and the eighth power increasing control is executed on the seventh inverter 15g. In accordance with this feature, the voltage of the first power supply subsystem 12a and the voltage of the second power supply subsystem 12b are made to approximate one another.

### [Comparison with Power Supply System of Comparative Example]

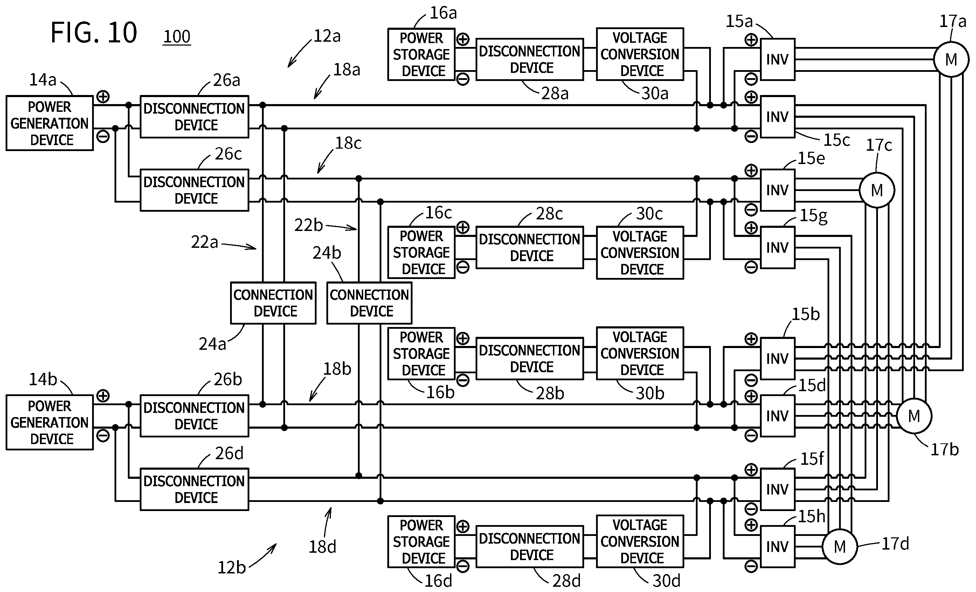

FIG. 10 is a diagram showing a power supply system 100 according to a Comparative Example. The power supply system 100 of the Comparative Example is equipped with a voltage conversion device 30a to a voltage conversion device 30d. The voltage conversion device 30a to the voltage conversion device 30d are DC-DC converters.

In the power supply system 100, the output voltages of the voltage conversion device 30a to the voltage conversion device 30d are set to be approximately equal. Therefore, when the first power supply circuit 18a and the second power supply circuit 18b are connected by the first connection device 24a, it is possible to prevent an excessive electric current from flowing to the first power supply circuit 18a and the second power supply circuit 18b. Similarly, when the third power supply circuit 18c and the fourth power supply circuit 18d are connected by the second connection device 24b, it is possible to prevent an excessive electric current from flowing to the third power supply circuit 18c and the fourth power supply circuit 18d.

However, since the power supply system 100 includes the voltage conversion device 30a to the voltage conversion device 30d, a problem arises in that the number of constituent parts that constitute the power supply system 100 increases, the weight of the power supply system 100 increases, and the manufacturing cost of the power supply system 100 increases. According to the present embodiment, the power supply system 10 does not include the voltage conversion device 30a to the voltage conversion device 30d, and thus the number of constituent components that constitute the power supply system 10 can be reduced, the power supply system 10 can be made lighter in weight, and the manufacturing cost of the power supply system 10 can be suppressed.

The power supply system 10 of the present embodiment includes the first connection circuit 22a and the second connection circuit 22b. However, the above-described technique can also be applied to a power supply system 10 that does not include the first connection circuit 22a and the second connection circuit 22b.

For example, in a case that the supply of DC power from the first power generation device 14a to the first power supply circuit 18a and the third power supply circuit 18c is disrupted, the first power suppression control is executed on the first inverter 15a, the second power suppression control is executed on the third inverter 15c, the third power suppression control is executed on the fifth inverter 15e, and the fourth power suppression control is executed on the seventh inverter 15g. In accordance with this feature, a decrease in the SOC of the first power storage device 16a and the third power storage device 16c can be suppressed.

Further, in a case that the supply of DC power from the first power generation device 14a to the first power supply circuit 18a and the third power supply circuit 18c is disrupted, the first power increasing control is executed on the second inverter 15b, the second power increasing control is executed on the fourth inverter 15d, the third power increasing control is executed on the sixth inverter 15f, and the fourth power increasing control is executed on the eighth inverter 15h. In accordance with this feature, in order to compensate for the decrease in electric power supplied from the first power supply subsystem 12a to the first motor 17a to the fourth motor 17d, the second power supply subsystem 12b accordingly supplies power to the first motor 17a to the fourth motor 17d. Therefore, a decrease in the output torque of the first motor 17a to the fourth motor 17d can be suppressed.

In relation to the above-described embodiment, the following Supplementary Notes are further disclosed.

### (Supplementary Note 1)

The power supply system (10) according to the present disclosure includes the first power supply circuit (18a) that supplies, to the first inverter (15a), the DC (direct-current) power output from the first power generation device (14a), the first power storage device (16a) connected to the first power supply circuit in parallel with the first power generation device, the second power supply circuit (18b) that supplies, to the second inverter (15b), the DC power output from the second power generation device (14b), the second power storage device (16b) connected to the second power supply circuit in parallel with the second power generation device, the first motor (17a) which is a dual three-phase motor configured to be driven by AC power obtained by conversion by the first inverter and further configured to be driven by AC (alternating-current) power obtained by conversion by the second inverter, and the control device (30) that controls the first inverter and the second inverter, wherein in the case that the supply of DC power from the first power generation device to the first power supply circuit is disrupted, the control device executes, on the first inverter, the first power suppression control to reduce the first ratio, which is the ratio of the first electric power supplied from the first inverter to the first motor with respect to the electric power consumption of the first motor, to be smaller than the first ratio prior to the supply of DC power from the first power generation device to the first power supply circuit being disrupted, and the control device further executes, on the second inverter, the first power increasing control to increase the second ratio, which is the ratio of the second electric power supplied from the second inverter to the first motor with respect to the electric power consumption of the first motor, to be larger than the second ratio prior to the supply of DC power from the first power generation device to the first power supply circuit being disrupted. In accordance with this feature, even in the case that the supply of DC power from the first power generation device to the first power supply circuit is disrupted, a decrease in the output torque of the first motor can be suppressed.

### (Supplementary Note 2)

The power supply system according to Supplementary Note 1 may further include the connection circuit (22a) including the connection device (24a) that is capable of connecting the first power supply circuit and the second power supply circuit, wherein the control device may be configured to execute, on the connection device, the connection control to connect the first power supply circuit and the second power supply circuit via the connection circuit, and in the case that the supply of DC power from the first power generation device to the first power supply circuit is disrupted and that the difference between the voltage of the first power supply circuit and the voltage of the second power supply circuit is greater than or equal to the predetermined first voltage threshold value, then the control device may execute the first power suppression control on the first inverter and also execute the first power increasing control on the second inverter until the difference between the voltage of the first power supply circuit and the voltage of the second power supply circuit is less than the predetermined second voltage threshold value, and thereafter the control device may execute the connection control on the connection device. In accordance with this feature, in the case that the connection control is executed in the connection device, it is possible to prevent an excessive current from flowing in the power supply system.

### (Supplementary Note 3)

The power supply system according to Supplementary Note 2 may further include the disconnection device (26a) that is capable of disconnecting the first power supply circuit and the connection circuit from the first power generation device, wherein, in the case that the supply of the direct-current power from the first power generation device to the first power supply circuit is disrupted, the control device may disconnect, by the disconnection device, the first power supply circuit and the connection circuit from the first power generation device and thereafter execute the connection control on the connection device. In accordance with this feature, it is possible to suppress an abnormality that has occurred in the first power generation device from having an influence on the first power supply circuit and the connection circuit.

### fw(Supplementary Note 4)

In the power supply system according to Supplementary Note 1, the difference between the magnitude of the first ratio that has become smaller due to the first power suppression control, and the magnitude of the second ratio that has become larger due to the first power increasing control, may be less than or equal to a predetermined value. In accordance with this feature, even in the case that the supply of DC power from the first power generation device to the first power supply circuit is disrupted, a decrease in the output torque of the first motor can be suppressed.

### (Supplementary Note 5)

The power supply system according to Supplementary Note 1 may further include the second motor (17b) which is a dual three-phase motor capable of being driven by AC power obtained by conversion by the third inverter (15c) and further capable of being driven by AC power obtained by conversion by the fourth inverter (15d), wherein the first power supply circuit may supply DC power output from the first power generation device, to the first inverter and the third inverter, the second power supply circuit may supply DC power output from the second power generation device, to the second inverter and the fourth inverter, and wherein, in the case that the supply of DC power from the first power generation device to the first power supply circuit is disrupted, the control device may execute, on the third inverter, the second power suppression control to reduce the third ratio, which is the ratio of the third electric power supplied from the third inverter to the second motor with respect to the electric power consumption of the second motor, to be smaller than the third ratio prior to the supply of DC power from the first power generation device to the first power supply circuit being disrupted, and may execute, on the fourth inverter, the second power increasing control to increase the fourth ratio, which is the ratio of the fourth electric power supplied from the fourth inverter to the second motor with respect to the electric power consumption of the second motor, to be larger than the fourth ratio prior to the supply of DC electric power from the first power generation device to the first power supply circuit being disrupted. In accordance with this feature, even in the case that the supply of DC power from the first power generation device to the first power supply circuit is disrupted, a decrease in the output torque of the second motor can be suppressed.

### (Supplementary Note 6)

The power supply system according to Supplementary Note 5 may further include the connection circuit including the connection device that is capable of connecting the first power supply circuit and the second power supply circuit, wherein the control device may be configured to execute, on the connection device, the connection control to connect the first power supply circuit and the second power supply circuit via the connection circuit, and in the case that the supply of DC power from the first power generation device to the first power supply circuit is disrupted and that the difference between the voltage of the first power supply circuit and the voltage of the second power supply circuit is greater than or equal to the predetermined first voltage threshold value, then the control device may execute the first power suppression control on the first inverter, execute the first power increasing control on the second inverter, execute the second power suppression control on the third inverter, and execute the second power increasing control on the fourth inverter until the difference between the voltage of the first power supply circuit and the voltage of the second power supply circuit is less than the predetermined second voltage threshold value, and may thereafter execute the connection control on the connection device. In accordance with this feature, in the case that the connection control is executed in the connection device, it is possible to prevent an excessive current from flowing in the power supply system.

### (Supplementary Note 7)

The moving object according to the present disclosure includes the power supply system according to any one of Supplementary Notes 1 to 6. In accordance with this feature, even in the case that the supply of DC power from the first power generation device to the first power supply circuit is disrupted, a decrease in the output torque of the first motor can be suppressed.

### (Supplementary Note 8)

In the control method for the power supply system according to the present disclosure, the power supply system includes the first power supply circuit that supplies, to the first inverter, DC power output from the first power generation device, the first power storage device connected to the first power supply circuit in parallel with the first power generation device, the second power supply circuit that supplies, to the second inverter, DC power output from the second power generation device, the second power storage device connected to the second power supply circuit in parallel with the second power generation device, and the first motor which is a dual three-phase motor capable of being driven by AC power obtained by conversion by the first inverter and further capable of being driven by AC power obtained by conversion by the second inverter. The control method for the power supply system includes, in the case that the supply of DC power from the first power generation device to the first power supply circuit is disrupted: executing, on the first inverter, the first power suppression control to reduce the first ratio, which is the ratio of the first electric power supplied from the first inverter to the first motor with respect to the electric power consumption of the first motor, to be smaller than the first ratio prior to the supply of DC power from the first power generation device to the first power supply circuit being disrupted; and executing, on the second inverter, the first power increasing control to increase the second ratio, which is the ratio of the second electric power supplied from the second inverter to the first motor with respect to the electric power consumption of the first motor, to be larger than the second ratio prior to the supply of DC power from the first power generation device to the first power supply circuit being disrupted. In accordance with this feature, even in the case that the supply of DC power from the first power generation device to the first power supply circuit is disrupted, a decrease in the output torque of the first motor can be suppressed.

### (Supplementary Note 9)

The program according to the present disclosure causes a computer to execute the control method for the power supply system according to Supplementary Note 8. In accordance with this feature, even in the case that the supply of DC power from the first power generation device to the first power supply circuit is disrupted, a decrease in the output torque of the first motor can be suppressed.

## Claims

1. A power supply system (10), comprising:
a first power supply circuit (18a) configured to supply, to a first inverter (15a), direct-current power output from a first power generation device (14a);
a first power storage device (16a) connected to the first power supply circuit in parallel with the first power generation device;
a second power supply circuit (18b) configured to supply, to a second inverter (15b), direct-current power output from a second power generation device (14b);
a second power storage device (16b) connected to the second power supply circuit in parallel with the second power generation device;
a first motor (17a) which is a dual three-phase motor configured to be driven by alternating-current power obtained by conversion by the first inverter and further configured to be driven by alternating-current power obtained by conversion by the second inverter; and
a control device (30) configured to control the first inverter and the second inverter,
wherein, in a case that supply of the direct-current power from the first power generation device to the first power supply circuit is disrupted,
the control device:
executes, on the first inverter, a first power suppression control to reduce a first ratio, which is a ratio of a first electric power supplied from the first inverter to the first motor with respect to an electric power consumption of the first motor, to be smaller than the first ratio prior to the supply of the direct-current power from the first power generation device to the first power supply circuit being disrupted; and
executes, on the second inverter, a first power increasing control to increase a second ratio, which is a ratio of a second electric power supplied from the second inverter to the first motor with respect to the electric power consumption of the first motor, to be larger than the second ratio prior to the supply of the direct-current power from the first power generation device to the first power supply circuit being disrupted.

2. The power supply system according to claim 1, further comprising a connection circuit (22a) including a connection device (24a) configured to connect the first power supply circuit and the second power supply circuit,
wherein, the control device is configured to execute, on the connection device, a connection control to connect the first power supply circuit and the second power supply circuit via the connection circuit, and
in a case that the supply of the direct-current power from the first power generation device to the first power supply circuit is disrupted and that a difference between a voltage of the first power supply circuit and a voltage of the second power supply circuit is greater than or equal to a predetermined first voltage threshold value, then the control device executes the first power suppression control on the first inverter and also executes the first power increasing control on the second inverter until the difference between the voltage of the first power supply circuit and the voltage of the second power supply circuit is less than a predetermined second voltage threshold value, and thereafter executes the connection control on the connection device.

3. The power supply system according to claim 2, further comprising a disconnection device (26a) configured to disconnect the first power supply circuit and the connection circuit from the first power generation device,
wherein, in the case that the supply of the direct-current power from the first power generation device to the first power supply circuit is disrupted, the control device disconnects, by the disconnection device, the first power supply circuit and the connection circuit from the first power generation device and thereafter executes the connection control on the connection device.

4. The power supply system according to claim 1, wherein a difference between a magnitude of the first ratio that has become smaller due to the first power suppression control, and a magnitude of the second ratio that has become larger due to the first power increasing control, is less than or equal to a predetermined value.

5. The power supply system according to claim 1, further comprising a second motor (17b) which is a dual three-phase motor configured to be driven by alternating-current power obtained by conversion by a third inverter (15c) and further configured to be driven by alternating-current power obtained by conversion by a fourth inverter (15d),
wherein:
the first power supply circuit supplies the direct-current power output from the first power generation device, to the first inverter and the third inverter; and
the second power supply circuit supplies the direct-current power output from the second power generation device, to the second inverter and the fourth inverter, and
wherein, in the case that the supply of the direct-current power from the first power generation device to the first power supply circuit is disrupted,
the control device:
executes, on the third inverter, a second power suppression control to reduce a third ratio, which is a ratio of a third electric power supplied from the third inverter to the second motor with respect to an electric power consumption of the second motor, to be smaller than the third ratio prior to the supply of the direct-current power from the first power generation device to the first power supply circuit being disrupted; and
executes, on the fourth inverter, a second power increasing control to increase a fourth ratio, which is a ratio of a fourth electric power supplied from the fourth inverter to the second motor with respect to the electric power consumption of the second motor, to be larger than the fourth ratio prior to the supply of the direct-current power from the first power generation device to the first power supply circuit being disrupted.

6. The power supply system according to claim 5, further comprising a connection circuit including a connection device configured to connect the first power supply circuit and the second power supply circuit,
wherein the control device is configured to execute, on the connection device, a connection control to connect the first power supply circuit and the second power supply circuit via the connection circuit, and
in a case that the supply of the direct-current power from the first power generation device to the first power supply circuit is disrupted and that a difference between a voltage of the first power supply circuit and a voltage of the second power supply circuit is greater than or equal to a predetermined first voltage threshold value, then the control device executes the first power suppression control on the first inverter, executes the first power increasing control on the second inverter, executes the second power suppression control on the third inverter, and executes the second power increasing control on the fourth inverter until the difference between the voltage of the first power supply circuit and the voltage of the second power supply circuit is less than a predetermined second voltage threshold value, and thereafter executes the connection control on the connection device.

7. A moving object comprising the power supply system according to any one of claims 1 to 6.

8. A control method for a power supply system, wherein the power supply system comprises:
a first power supply circuit configured to supply, to a first inverter, direct-current power output from a first power generation device;
a first power storage device connected to the first power supply circuit in parallel with the first power generation device;
a second power supply circuit configured to supply, to a second inverter, direct-current power output from a second power generation device;
a second power storage device connected to the second power supply circuit in parallel with the second power generation device; and
a first motor which is a dual three-phase motor configured to be driven by alternating-current power obtained by conversion by the first inverter and further configured to be driven by alternating-current power obtained by conversion by the second inverter,
the control method for the power supply system, comprising,
in a case that supply of the direct-current power from the first power generation device to the first power supply circuit is disrupted:
executing, on the first inverter, a first power suppression control to reduce a first ratio, which is a ratio of a first electric power supplied from the first inverter to the first motor with respect to an electric power consumption of the first motor, to be smaller than the first ratio prior to the supply of the direct-current power from the first power generation device to the first power supply circuit being disrupted; and
executing, on the second inverter, a first power increasing control to increase a second ratio, which is a ratio of a second electric power supplied from the second inverter to the first motor with respect to the electric power consumption of the first motor, to be larger than the second ratio prior to the supply of the direct-current power from the first power generation device to the first power supply circuit being disrupted.

9. A program configured to cause a computer to execute the control method for the power supply system according to claim 8.
